# EUROPEAN PATENT APPLICATION

(11) **EP 2 277 684 A1**
(43) Date of publication of application: **26.01.2011**
(21) Application number: 10169302.6
(22) Date of filing: 12.07.2010
(51) Int. Cl.: B29C 65/18, B32B 37/06, B32B 41/02

(54) **Device and method for welding films in continuous**

(30) Priority: 13.07.2009 IT PC20090007
(71) Applicant: CG Project Soc. Coop., 29121 Piacenza (IT)
(72) Inventor: Chiappini, Giuseppe, 29027 Gariga di Podenzano (PC) (IT)
(74) Representative: Fisauli, Beatrice A. M.

(57) **Abstract**

The present invention relates to a device for continuous welding of two films, one made of paper and one of plastic used to manufacture sterile packages for the containment of surgical instruments.
The device according to the invention comprises:
- first means (2,5) to preheat a first layer of film of paper material (F1);
- second means (3, 6) to preheat a second layer of film of plastic material (F2);
- a welding unit (4) capable of continuously welding of said first film F1 and of said second film F2 to form at least a tubular element welded at the side edges;
characterized by the fact that the welding unit comprises at least one pair of heated rotating wheels (7) in contact with a motorized heated roller (9) at a point of pressure (PS) and a tensioner capable of keeping these films (F1, F2) overlapped and in contact with the outer surface of the heated wheel for some distance between a point of contact (PT) and the pressure point (PS) to allow the welding of the two films while they are in contact with the outer surface of heated wheels (7).

## Description

The present invention relates to a device for continuous welding of film, especially a welding device of two films of different materials without the use of glue or similar adhesive and its method.

In detail the invention relates to a device and a method to weld two films, one made of paper and one of plastic used to make sterile packages such as those used in medicine, dentistry and the like, to hold surgical instruments.

These packs are made from a tubular element that consists of two layers of film, one made of paper and one of plastic (polypropylene or similar), welded longitudinally at the two side edges, and that usually comes in rolls of some meters long.

This tubular element is then used by other types of machines that allow its cutting according to the size of the sterilized surgical instrument which it should contain and welded transversely to create a sealed package.

The invention relates to just one device and a method to weld two films, one made of paper and one of plastic, at the two side edges to form said tubular element.

Currently, to realize these tubular elements are used press machines which handle heated bars between which are interposed two layers of material to be welded.

Thanks to heat contribution the plastic film reaches a temperature that will cause a local melting of the material that allows the union with the paper without the contribution of additional adhesives or similar.

This process is essential to ensure the strict separation or "peelability" of the two materials when opening the package without tearing the paper material, as required by provisions in the medical fields.

To achieve tubular components of a certain length, the two layers of material, usually stored on reels, are intermittently fed into the said press machine with a pitch approximately equal to the length of said welding bars.

Typically, these reels have a width greater than the width of the tubular element, so the machines are configured in a manner as to provide a plurality of heating rods arranged in parallel and spaced from one another depending on the width of tubular element to obtain, or of the packaging, which act simultaneously on two layers creating a plurality of parallel longitudinal welds.

The two welded layers are then cut longitudinally in correspondence with the center of each welding in order to obtain many tubular elements welded at the edges. These known devices however have some drawback. In fact, to ensure a perfect tightness and sterility of the pack, at each step of welding it is necessary to overlap for some distance (about a centimeter/inch) the previous welding line with the next.

Practically this section of overlap is subjected to two cycles of repeated welding.

The problem that arises in these cases is that at this point of overlap the plastic material undergoes a change too strong (due to the double-heating) which reduces the separation characteristics or "peelability" of the two materials considerably.

Particularly at this point, when opening the packaging, there is a change of resistance to the separation of the two materials, which could tear or damage the paper material, and with the risk that the operator can fall or get out of hand the sterilized surgical tool.

The intermittent welding operation also involves a limited production speed as at each welding cycle the heated bars must remain in contact with the material for a given time in order to allow the material to reach the correct melting temperature and to complete the welding process.

In this context, the aim of the present invention is to propose a device for continuous welding of film, particularly a device for the welding of two films of different materials without the use of glues, adhesives or the like, and its method, which exceed the disadvantages of the known technique mentioned above.

The particular purpose of the invention is to propose a device and a method for the continuous welding of films, allowing to eliminate the problem of overlap in the welding that characterizes the known systems. In detail the purpose of the invention is to propose a device and a method for the continuous welding of films that achieve a uniform and constant welding along the edge of the tubular element that respects the required characteristics of separability or "peelability.

Another purpose of the present invention is to provide a device and a method for the continuous welding of films that will increase the speed of productivity thanks to continuous and uninterrupted welding of two layers of film.

These aims specified are substantially achieved by a device for continuous welding of films including:
- first means to preheat a first layer of film of paper material;
- second means to preheat a second layer of film of plastic material;
- a welding unit (4) capable of continuously welding of said first film F1 and of said second film F2 to form at least a tubular element welded at the sides, characterized by the fact that the welding unit comprises at least one pair of heated rotating wheels (7) in contact with a motorized heated roller (9) at a point of pressure (PS) and a tensioner capable of keeping these films (F1, F2) overlapped and in contact with the outer surface of the heated wheel for some distance between a point of contact 2 (PT) and the pressure point (SP) to allow the welding of the two films while they are in contact with the outer surface of heated wheels (7). In detail, that said section between the contact point and the point of pressure is an arc between 120 ° and 220° and more preferably between 160° and 180°. The permanence on that said arc of the two overlapped films will determine their welding, eliminating the problem of intermittency.

Those at least two heated wheels are mounted on a shaft with the ability to slide transversely to vary the width of said at least one tubular element. The method according to the invention provides for:
- unwind a film of paper material and a film of plastic material from the respective reels;
- preheat these films wrapping them on their heated rubber-coated calenders;
- overlap the two films in the tensioning device;
- bring into contact said overlapped films on at least one pair of heated wheels in a contact point;
- maintain these overlapped films in contact with the heated wheel surfaces for some distance between that contact point and the pressure point;
- press these overlapped films between said heated wheels and a motorized roller that is heated in a pressure point;
- cool said welded film wrapping them on two chilled rubber-coated rollers.

As mentioned before the contact section of the films on the heated wheel is between 120° and 220° and more preferably between 160° and 180°.

Additional features and advantages will appear more clear from the indicative description and therefore not limited to, of an example of a preferred embodiment, but not exclusively of the invention, as shown in the attached figures in which:

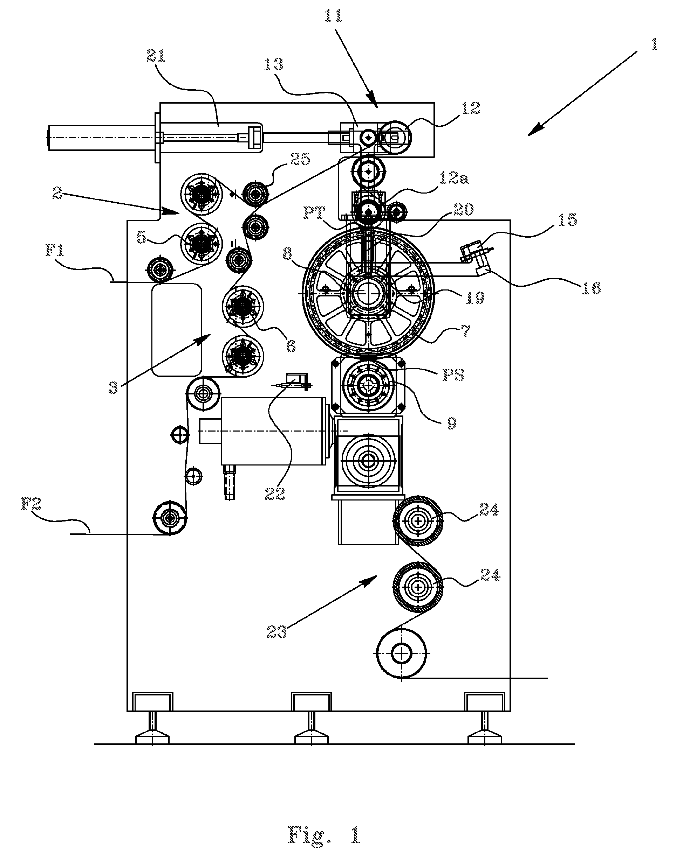

- Figure 1 is a side view in section of a device for continuous welding of film according to the invention in operational position;
- Figure 2 is a front view of the device for the continuous sealing film of Figure 1;
- Figure 3 is a side view in section of the device for film welding of Figure 1, in a non-operational position.

With reference to attached figures, the device for the welding of film, indicated overall with 1, comprises first means 2 acts to preheat a first layer of film of paper material F1, second means 3 acts to preheat a second layer of film of plastic material F2 and a welding unit 4 that welds in a continuous process said first F1 and said second F2 layer of film to form at least a tubular element welded along the longitudinal sides used for the manufacture of airtight and sterile surgical instruments packages. In detail these first means 2 include at least one heated calendar that drives the film F1 of paper material to the welding unit 4.

Preferably there is a second pair of calenders on which the film F1 is wrapped in a "S" shaped form so as to contact each calendar with a respective side.

This stage of preheating is necessary to remove any residual moisture that the material may have accumulated during the storage time (eg if it was stored in wet warehouses) and to allow a perfect application on the various transport rollers of the machine.

Similarly, the second preheat means 3 include at least a calender 6, and preferably a pair of calenders 6 on which the second film layer F2 of plastic material is wound.

In the detail that film F2 is a film made of thermoplastic material such as polypropylene or the like.

Even more in detail said film F2 can be a laminated film with a first outer layer that confers resistance to the film and a second inner layer, the layer directly in contact with the paper film, with a melting lower point to encourage the adhesion to the paper layer.

One example is a laminated film called PP-PPT, which includes a first layer of polypropylene and a second layer of polyester.

These calenders 5 and 6 consist of a steel roller, preferably coated with a plastic rubber material to improve the drive, which has a number of resistors placed underneath that rubber surface.

These resistors are electrically powered through manifolds equipped with sliding contacts, or the like (not shown in the figure) placed at the ends of each calender.

This welding unit 4 includes at least one pair of heated wheels 7, mounted on a shaft 8, which rotate in contact with a motorized heated roller 9, mounted on a shaft.

The two layers of film F1 and F2 are guided into the lamination unit until they overlap with each other before wrapping themselves for some distance around these heated wheels 7.

To this end there is a tensioning device, indicated overall with 11, including a plurality of rollers 12 mounted on a support structure 13, that have the function to maintain the two overlapped films perfectly tensioned and to lead them correctly around the perimeter of these heated wheels 7. In detail the position of the roller 12a closest to the heated wheels determines the point of tangency PT where the two layers of overlapped film are in contact with the heated wheel 7.The arc between said point of tangency PT and the contact point PS between the heated wheels 7 and the heated counter-roller 9 (i.e. the point where the welded films exit) corresponds to the arc of contact of the layers of films with those heated wheels 7 allowing their welding.

Numerous tests show that an optimal arc of contact is between 120° and 220° and more preferably between 160 ° and 180 °.

The diameter of the heated wheels, the rotation speed (i.e. the feed rate of the films), the temperature of the heated wheels and the contact time of the two films F1 and F2 with these wheels, are all parameters associated with each other.

Preferably these heated wheels 7 have a diameter equal or greater than 30 mm in order to reduce the deformation of the films that are wrapped around the perimeter of these heated wheels.

The rotation speed and the temperature are then determined so as to maintain the two films F1 and F2 in contact with the heated wheels for the minimum time required to perform welding, at a given temperature.To avoid damaging the material or burning it, the temperature of the heated wheels is maintained between 150 °C and 200 °C and preferably at 180 °C, the temperature of the counter-roller 9 is instead maintained preferably at 0 °C.

At the point PS by pressing the two film layers F1 and F2 between those heated wheels and the heated counter-roller the pressure welding stabilizes, making it even and perfect for the entire length of said welded tubular element.

Preferably during wrapping on the heated wheels (7) it is the paper material that contacts directly the surface of the heated wheels to prevent the plastic material can burn or leave residues on the surface of the wheels.

The distance between a heated wheel and the other is adjustable and determines the width of the tubular element to be obtained.

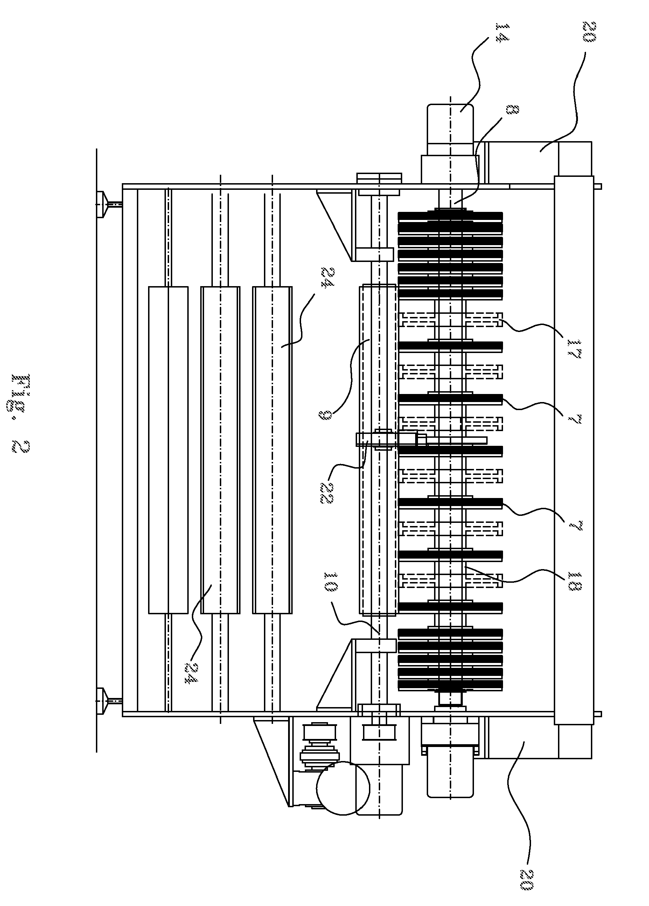

Similarly to what happens in known systems, it is possible to vary the number of heated wheels 7 so as to realize a plurality of parallel continuous welding if you use rolls of film of high width (as shown in Figure 2).The two layers can be welded and then cut lengthwise at the center line of each weld to achieve a plurality of tubular elements welded at the edges.

In detail these heated wheels 7 comprise a wheel made of a metal material that conducts heat well (such as aluminum or its alloys), which houses a molded resistance for the heating of the resistance itself.

As for the preheating calenders 5 and 6, the power of these resistors is provided through a manifold 14 fitted with sliding contacts.

The temperature of each wheel is controlled by infrared sensors 15 that detect the outer temperature surface of the wheel in more points per revolution of the wheel itself. These sensors 15 are mounted on a support bar 16 with the ability to slide transversely on it to be aligned with each wheel.On the shaft 8 between at least two heated wheels 7 may also be mounted cold support wheels 17, preferably rubber coated, to keep the two films lined up and placed in the case that a tubular of rather high width is realized. These support wheels are designed to be removable from the shaft 8 and to allow its use only when necessary.

The position of the various wheels on the shaft 8, and hence the distance between them can be adjusted by sliding transversely the same along the shaft to make tubular elements of different width. Between one wheel and the other spacers 18 can be inserted to ensure the pitch of the welded tubular elements to be obtained. These spacers 18, as the wheels 17 are removable from the shaft 8 to allow its use only when necessary.

Said shaft 8 is also mounted on a pair of skids 19, moved by actuators, which allow you to vary the pressure of the wheels 7 on the heated counter-roller 9, depending on the type of welding to achieve. The pressure of these actuators is controlled mechanically by a special ring nut and counter-ring nut system.

These skids also allow you to remove the wheels heated by two layers of film in case of stopping the machine to avoid burning of the films themselves.

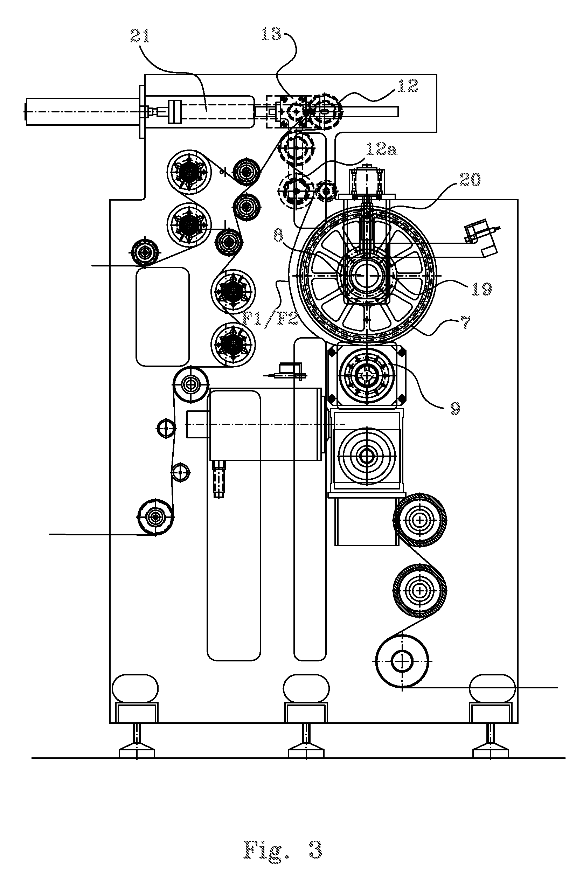

For this purpose also the support structure 13 of the tensioning device 12 can slide under the action of actuators 21 for spacing the roller 12a by the heated wheels 7 and facilitate the separation of the layers of a film from the wheels when stopping the machine as shown in Figure 3.

As already mentioned the resistance with these wheels is provided by the heated counter-roller 9.

In detail said roller provides the outer surface coated with a double rubber coating: the innermost layer, that in contact with the metal core of the roller, is made of silicon-based rubber with hardness about 70/75 shore, while the exterior coating consists of silicone having hardness of shore 100. The choice of a roller so configured allows the partial penetration of the heated wheels at the point of pressure PS and provides a perfect adhesion of the plastic film F2 and of the paper film F1.The heated counter-roller 9 also acts as a motorized draw allowing the continuous flow of said at least one welded tubular element.

Also the heating of the roller 9 occurs through resistors that are housed in the roller itself under the rubber surface.

The detection of the temperature occurs by one or more infrared sensors 22.

Preferably, to prevent condensation on the welded films, downstream of the welding unit 4 there is a cooling zone 23 comprising one or more rollers 24 that are cooled by water circulation inside.

The method according to the invention provides for:
- unroll said film F1 of paper material and said film F2 of plastic material from the respective reels;
- preheat said films F2 and F2 by wrapping them on their heated calenders 5 and 6;
- overlap the two films F1 and F2 in tensioning device 12;
- bring into contact said overlapped films F1 and F2 on at least one pair of heated wheels 7 at a contact point (PT);
- keep these overlapped films F1 and F2 in contact with the surface of the heated wheel 7 for some distance between said contact point (PT) and a pressure point (PS) to enable continuous welding;
- press these overlapped films F1 and F2 between those heated wheels 7 and a heated and rubber coated counter-roller 9 at a pressure point (PS) to stabilize the continuouswelding;
- cool said welded films F1 and F2 wrapping them on cooled roller (24).

As mentioned before said contact section of the films on the heated wheel is between 120° and 220° and more preferably between 160° and 180°. The pressure on the two films is regulated by the actuators that control the motion of the shaft 8, and therefore of the heated wheels 7 approaching or moving away from that heated counter-roller 9.

The operation of the device is described in detail below:
two layers of film F1 and F2 unwound by the respective reels (not shown here) are guided by their preheating calenders 5 and 6 towards the welding units 4 and in detail to the tensioner 12. More in detail these two layers F1 and F1 are overlapped on a roller 2 before entering into the welding unit 4.

Thanks to the tension exerted by the roller 12a, the two layers are wrapped around the heated wheels 7 from the point PT to the point PS. The contact with the heated wheels determines the welding of the two layers, that of paper material and that of plastic material.

At the point PS by pressing the two film layers F1 and F2 between those heated wheels and the motorized heated counter-roller the welding pressure stabilizes, making it even and perfect for the entire length of at least said welded tubular element.After having left the welding area, the two layers form at least a tubular element. Said tubular element is cooled by wrapping it on cooling rollers 24 to prevent deformations due to high temperature.

Thanks to the present invention is therefore possible to realize a device for the welding of two films, one made of paper and one of plastic, of the type used to make sterile packaging for surgical instruments, allowing you to weld these films continuously eliminating the problem of the overlapping in the welding which characterizes the known systems.

Thanks to the present invention it is also possible to vary quickly and easily the position of the heated wheels on the shaft to fit them to the width of the reels of film used and / or to the width of the tubular elements to be manufactured.

The continuous and uninterrupted welding also increases the production speed of the machine substantially reducing production costs.The invention has been described, for purposes of illustration and not limitation, according to a preferred form of implementation. The technical expert in the field will find many other forms of implementation, all falling within the protection of the claims that follow.

## Claims

1. Device for continuous welding of films including:
- first means (2, 5) to preheat a first layer of film of paper material F1;
- second means (3, 6) to preheat a second layer of film of plastic material F2;
- a welding unit (4) for continuous welding of said first film F1 and of said second film F2 in order to form at least a tubular element welded at the side edges;
**characterized by** the fact that the welding unit comprises at least one pair of heated rotating wheels (7) in contact with a motorized heated roller (9) at a pressure point (PS), being provided at least one tensioning roller (12a), placed in the proximity of these heated wheels (7), that keeps these films (F1, F2) overlapped and in contact with the outer surface of the heated wheels for a certain distance between a contact point (PT) and said pressure point (PS).

2. Device for continuous welding of film according to claim 1, **characterized by** the fact that said section between the contact point (PT) and the pressure point (PS) is an arc between 120° and 220°;

3. Device for continuous welding of film according to claim 2, **characterized by** the fact that said section between the contact point (PT) and the pressure point (PS) is an arc between 160° and 180°.

4. Device for continuous welding of film according to any of the preceding claims, **characterized by** the fact that said heated wheels (7) are mounted on a shaft (8) with the ability to slide transversely to it in order to vary over the width of this at least one tubular element.

5. Device for continuous welding of film according to claim 4, **characterized by** the fact of providing at least one wheel (17) mounted on said heated rubber coated shaft (8) between those heated wheels (7).

6. Device for continuous welding of film according to any of the preceding claims, **characterized by** the fact that said wheels are heated by at least a resistance placed inside the wheel, said at least one resistor being fed through a manifold (14) provided with contacts strips.

7. Device for continuous welding of film, according to one claim 4 and 6, **characterized by** the fact that said heated resistances of each wheel (7) are powered independently and the temperature of each wheel is controlled by an infrared sensor (15) mounted on a support bar (16) with the ability to slide transversely on it to be aligned with its wheel.

8. Device for continuous welding of film according to claim 4, **characterized by** the fact that said shaft (8) is mounted on a pair of skids (19) moved by actuators (20) that allow you to mechanically vary the pressure of the heated wheels (7) on the heated counter- roller (9) depending on the type of welding to obtain.

9. Device for continuous welding of films according to any of the preceding claims, **characterized by** the fact that said tensioning roller (12a) is mounted on a sliding support structure (13) moved by actuators (21) to space out said roller (12a) from the heated wheels (7) so as to facilitate the detachment of the layers of film from these wheels (7) in case of machine stop.

10. Device for continuous welding of film according to any of the preceding claims, **characterized by** the fact that the surface of said heated counter-roller (9) has a first inner layer made of silicon-based rubber and a second outer layer made of silicon, one or more resistances placed under these layers to allow the reheating.

11. Method for continuous welding of film **characterized by** the fact of providing the following steps consisting in:
- unwind a first film (F1) of paper material and a second film (F2) of plastic material from the respective reels;
- preheat said films (F2, F2) by wrapping them on their heated calenders (5, 6);
- overlap the first and second film (F1, F2) in tensioning device (12);
- bring into contact said overlapped films (F1, F2) on at least one pair of heated wheels (7) at a contact point (PT);
- keep these overlapped films (F1, F2) in contact with the surface of said heated wheel (7) for some distance between said contact point (PT) and a pressure point (SP) to enable the welding of the films to each other;
- press these overlapped films (F1, F2) between those heated wheels (7) and a heated roller (9) at a pressure point (PS) to stabilize the welding;
- cool said welded films (F1, F2) wrapping them on cooled roller (24).

12. Method for continuous welding of films according to claim 11, **characterized by** the fact that said section between said contact point (PT) and said pressure point (PS) is set between 160° and 180°.

13. Method for continuous welding of film according to claim 11, **characterized by** the fact that the welding pressure between those heated wheels (7) and said heated roller (9) is variable moving away or approaching those heated wheels (7) by that heated counter-roller (9).
